(19) Europäisches Patentamt
European Patent Office
Office européen des brevets

(11) EP 4 579 922 A2

(12) EUROPEAN PATENT APPLICATION

(43) Date of publication:
02.07.2025 Bulletin 2025/27

(21) Application number: 24223440.9

(22) Date of filing: 27.12.2024

(51) International Patent Classification (IPC):
H01M 50/403 (2021.01)      H01M 50/429 (2021.01)
H01M 50/44 (2021.01)

(52) Cooperative Patent Classification (CPC):
H01M 50/44; C08L 33/26; H01M 50/403;
H01M 50/4295

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.12.2023 SG 10202303678

(71) Applicant: Madebyflint Ptd. Ltd.
Singapore 637145 (SG)

(72) Inventor: CHARLES, Carlo Emmanuel
150052 Singapore (SG)

(74) Representative: Jannig & Repkow
Patentanwälte PartG mbB
Klausenberg 20
86199 Augsburg (DE)

(54) HYDROGEL COMPOSITION, HYDROGEL-REINFORCED CELLULOSE PAPER BATTERY SEPARATOR AND A PAPER BATTERY COMPRISING THE SAME

(57) A hydrogel composition for reinforcing a cellulose paper battery separator comprises a monomer, a cross-linking reagent, an initiator, and a metal salt. A hydrogel-reinforced cellulose paper battery separator comprises a cellulose paper, and a hydrogel integrated within the cellulose paper. A paper battery comprises the hydrogel reinforced cellulose paper batter separator. A method for fabricating the hydrogel reinforced cellulose paper batter separator.

- Cathode
- Hydrogel-reinforced Cellulose Paper Separator
- Anode

Fig. 1

EP 4 579 922 A2

## Description

### Field of the Invention

The invention relates to battery technology, specifically to a hydrogel composition, a hydrogel-reinforced cellulose paper separator designed for use in batteries, and a paper battery comprising the hydrogel-reinforced cellulose paper separator.

### Background of the Invention

A paper battery is a flexible, ultra-thin energy storage and production device formed by combining carbon nanotubes with a conventional sheet of cellulose-based paper.

A paper battery acts as both a high-energy battery and super capacitor, combining two components that are separate in traditional electronics. This combination allows the battery to provide both long-term, steady power production and bursts of energy. Non-toxic, flexible paper batteries have the potential to power the next generation of electronics, medical devices and hybrid vehicles, allowing for radical new designs and medical technologies.

A paper battery is typically composed of a paper separator, and a pair of films disposed on either side of the paper separator, wherein each film is pasted to different electrolytes like lithium titanium oxide (LTO) and lithium cobalt oxide (LCO).

The battery separator is a thin, polymeric membrane that is placed between a battery's anode and cathode to prevent short circuits and maintain the battery's safety and performance. The battery separator prevents electrical conduction while still allowing ionic conduction, and keeps the anode and cathode from touching, which can cause fires, explosions, or other malfunctions.

There are many types of separators, including polyolefin, nonwoven, and ceramic composite separators. The material used to make the separator, as well as its structure, must be chemically and electrochemically stable and mechanically strong enough to withstand the high tension during battery construction.

Conventional battery separators often face challenges in terms of performance, safety, and environmental impact.

It is imperative to develop a battery separator that can enhance battery efficiency while being eco-friendly.

### Summary of the Invention

The present invention provides a hydrogel composition for reinforcing a cellulose paper battery separator, aiming to improve mechanical strength, thermal stability, electrochemical efficiency, and composability of batteries, for example, paper batteries.

In certain embodiments, the hydrogel composition comprises a monomer, a cross-linking reagent, an initiator, and a metal salt, where the monomer is one selected from the group consisting of acrylamide, vinyl alcohol, ethylene glycol, and chitosan, the cross-linking reagent is one selected from the group consisting of N,N'-methylenebis(acrylamide), and glutaraldehyde, the initiator is one selected from the group consisting of potassium persulfate, ammonium persulfate, and azobisisobutyronitrile, and the metal salt is zinc salt. In certain embodiments, the zinc salt is one selected from the group consisting of $ZnSO_4$, zinc acetate, and zinc chloride.

In certain embodiments, the hydrogel composition comprises acrylamide in the range of 0.7M to 2.8M, N, N'-methylenebis(acrylamide) in the range of 0.002M to 0.3M, potassium persulfate in the range of 0.03M to 0.12M, and $ZnSO_4$ in the range of 1.0M to 3.0M.

The present invention also provides a hydrogel-reinforced cellulose paper battery separator.

In certain embodiments, the hydrogel-reinforced cellulose paper battery separator comprises a cellulose paper, and a hydrogel integrated within the cellulose paper, wherein the hydrogel is derived from the hydrogel composition comprising acrylamide, N,N'-methylenebis(acrylamide), potassium persulfate, and a zinc salt. In certain embodiments, the acrylamide is in the range of 0.7M to 2.8M, the N, N'-methylenebis(acrylamide) in the range of 0.002M to 0.3M, the potassium persulfate in the range of 0.03M to 0.12M, and the $ZnSO_4$ in the range of 1.0M to 3.0M.

The present invention also provides a paper battery comprising a hydrogel-reinforced cellulose paper battery separator, a cathode film being disposed on one surface of the hydrogel-reinforced cellulose paper battery separator, and an anode film being disposed on the other surface of the hydrogel-reinforced cellulose paper battery separator.

The present invention further provides a method for fabricating a hydrogel-reinforced cellulose paper battery separator.

In certain embodiments, the method comprises placing a cellulose paper into a mold, preparing a hydrogel composition by combining acrylamide, N,N'-methylenebis(acrylamide), potassium persulfate, and a zinc salt in deionized water, applying the hydrogel composition into the mold; covering the lid of the mold with a clipper to prevent air entering;

and curing at a controlled temperature and pressure to form a hydrogel-reinforced cellulose paper battery separator. In certain embodiments, the curing is done by putting the mold into a vacuum oven for 4-8 hours at 30-90°C.

The objectives and advantages of the invention will become apparent from the following detailed description of preferred embodiments thereof in connection with the accompanying drawings.

**Brief Description of the Drawings**

Preferred embodiments according to the present invention will now be described with reference to the Figures, in which like reference numerals denote like elements.

Fig. 1 is an exemplary diagram illustrating the structures of a hydrogel reinforced cellulose paper battery in accordance with one embodiment of the present invention.

Fig. 2 shows an exemplary graph presenting the results of flexibility test and performance of the hydrogel reinforced cellulose paper battery in accordance with one embodiment of the present invention.

Fig. 3 shows an exemplary graph presenting the results of electrochemical impedance spectroscopy (EIS) analysis of the hydrogel reinforced cellulose paper battery separator in accordance with one embodiment of the present invention.

Fig. 4 shows exemplary graphs presenting the results of electrochemical stability analysis of the electrolyte of the hydrogel reinforced cellulose paper separator in accordance with one embodiment of the present invention; Fig. 4A shows the positive linear sweep voltammetry (LSV); Fig. 4B shows cyclic voltammetry (CV) curves of $Zn\|MnO_2$ coin cell with the hydrogel reinforced cellulose paper separator.

Fig. 5 shows an exemplary graph presenting the results of galvanostatic cycling performance of $Zn\|Zn$ symmetric cell of the hydrogel reinforced cellulose paper separtor in accordance with one embodiment of the present invention.

Fig. 6 shows an exemplary graph presenting the results of electrochemical energy storage performance of electrolyte at $Zn\|MnO_2$ hydrogel reinforced cellulose paper separator in accordance with one embodiment of the present invention.

**Detailed Description of the Invention**

The present invention may be understood more readily by reference to the following detailed description of certain embodiments of the invention.

Throughout this application, where publications are referenced, the disclosures of these publications are hereby incorporated by reference, in their entireties, into this application in order to more fully describe the state of art to which this invention pertains.

The present invention provides a hydrogel composition that can be used to reinforce a cellulose paper to produce a hydrogel-reinforced cellulose paper battery separator. The hydrogel-reinforced cellulose paper separator serves to prevent direct contact between the battery's positive and negative electrodes, facilitating ion transport, and thus reducing internal resistance. This results in improved battery performance, safety, and longevity.

In certain embodiments, the hydrogel composition comprises a monomer, a cross-linking reagent, an initiator, and a metal salt, where the monomer is one selected from the group consisting of acrylamide, vinyl alcohol, ethylene glycol, and chitosan, the cross-linking reagent is one selected from the group consisting of N,N'-methylenebis(acrylamide), and glutaraldehyde, the initiator is one selected from the group consisting of potassium persulfate, ammonium persulfate, and azobisisobutyronitrile, and the metal salt is zinc salt. In certain embodiments, the zinc salt is one selected from the group consisting of $ZnSO_4$, zinc acetate, and zinc chloride.

In certain embodiments, the hydrogel composition comprises acrylamide in the range of 0.7M to 2.8M, N, N'-methylenebis(acrylamide) in the range of 0.002M to 0.3M, potassium persulfate in the range of 0.03M to 0.12M, zinc salt ($ZnSO_4$) in the range of 1.0M to 3.0M, and water.

The present invention provides a hydrogel-reinforced cellulose paper battery separator. Cellulose is a natural polymer composed of long chains of glucose units, typically sourced from plants, agricultural waste, or bacterial cellulose. It naturally has a porous structure, allowing for modification to achieve well-defined pore sizes that enhance ionic conductivity. The strong hydrogen-bonded network in cellulose contributes to its mechanical stability and flexibility, making it an excellent choice for use in battery separators. Additionally, cellulose is chemically stable, low-cost, and environmentally friendly. Paper made from cellulose fibers thus enhances the mechanical performance of the gel in battery separators, providing both structural support and improved ion flow

In certain embodiments, the hydrogel-reinforced cellulose paper battery separator comprises a cellulose paper, and a hydrogel integrated within the cellulose paper, wherein the hydrogel is derived from the hydrogel composition comprising acrylamide, N,N'-methylenebis(acrylamide), potassium persulfate, and a zinc salt. In certain embodiments, the acrylamide is in the range of 0.7M to 2.8M, the N, N'-methylenebis(acrylamide) in the range of 0.002M to 0.3M, the potassium persulfate in the range of 0.03M to 0.12M, and the $ZnSO_4$ in the range of 1.0M to 3.0M. As for the cellulose paper, its dimensions are adaptable to any specific application to ensure the hydrogel-reinforced cellulose paper battery separator function properly. In certain embodiments, the cellulose paper can have a length of 4-7 cm, a width of 3-6 cm, a thickness of 150-200 $\mu$m, and a pore size of less than 8 $\mu$m.

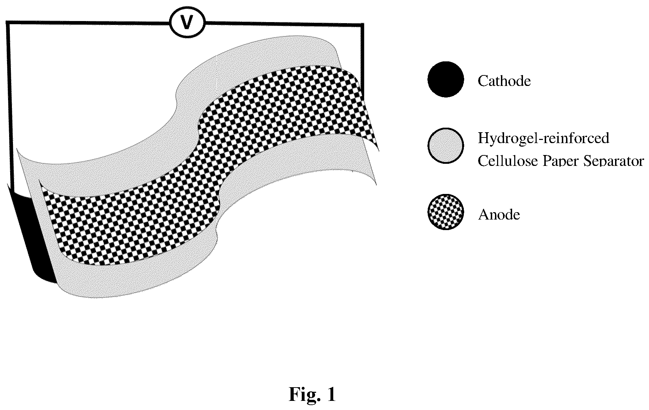

The present invention also provides a paper battery. As illustrated in Fig. 1, the paper battery comprises a hydrogel-reinforced cellulose paper battery separator, a cathode film and an anode film, where the cathode film is coated on the bottom surface of the hydrogel-reinforced cellulose paper battery separator, and the anode film is coated on the upper surface of the hydrogel-reinforced cellulose paper battery separator; the resultant paper battery has high flexibility because of the presence of the hydrogel-reinforced cellulose paper separator.

The present invention further provides a method for fabricating a hydrogel-reinforced cellulose paper battery separator.

In certain embodiments, the method comprises placing a cellulose paper into a mold, preparing a hydrogel composition by combining acrylamide, N,N'-methylenebis(acrylamide), potassium persulfate, and a zinc salt in deionized water, applying the hydrogel composition into the mold; covering the lid of the mold with a clipper to prevent air entering; and curing at a controlled temperature and pressure to form a hydrogel-reinforced cellulose paper battery separator. In certain embodiments, the curing is done by putting the mold into a vacuum oven for 4-8 hours at 30-90°C.

The following exemplary compositions and processes are provided for the sole purpose of illustrating the principles of the present inventions; they are by no means intended to limit the scope of the present inventions.

**Examples**

**Preparation of hydrogel composition**

The hydrogel composition is prepared by dissolving 2M acrylamide, 0.05M N,N'-methylenebis(acrylamide), 0.05M potassium persulfate, and varying concentrations of $ZnSO_4$ in deionized water to achieve optimum ionic conductivity in Zn-based paper battery.

**Example 1.** Hydrogel composition from 1 M ZnSO4 aqueous solution comprising acrylamide, N,N'-methylenebis(acrylamide), and potassium persulfate.

The hydrogel composition is prepared by dissolving 1 M ZnSO4, 2 M acrylamide, 0.05 M N,N'-methylenebis(acrylamide), and 0.05 M potassium persulfate in deionized water.

**Example 2.** Hydrogel composition from 2 M ZnSO4 aqueous solution comprising acrylamide, N,N'-methylenebis(acrylamide), and potassium persulfate.

The hydrogel composition is prepared by dissolving 2 M ZnSO4, 2 M acrylamide, 0.05 M N,N'-methylenebis(acrylamide), and 0.05 M potassium persulfate in deionized water.

**Example 3.** Hydrogel composition from 3 M ZnSO4 aqueous solution comprising acrylamide, N,N'-methylenebis(acrylamide) , and potassium persulfate .

The hydrogel composition is prepared by dissolving 3 M ZnSO4, 2 M acrylamide, 0.05 M N,N'-methylenebis(acrylamide), and 0.05 M potassium persulfate in deionized water.

Table 1. The effect of ZnSO4 concentration on the resistance of hydrogel composition

| Concentration of $ZnSO_4$ | Resistance |
|---|---|
| 1 M | 3.046 $\Omega$ |
| 2 M | 1.738 $\Omega$ |
| 3 M | 2.232 $\Omega$ |

The paper battery with only cellulose paper as separator exhibited 3.7 time higher resistance (6.492 $\Omega$) than that of hydrogel-reinforced cellulose paper separator at 2 M concentration of ZnSO4 because of the poor ion transport through the rigid cellulose paper.

**Fabrication Process of hydrogel-reinforced cellulose paper battery separator**

The hydrogel-reinforced cellulose paper battery separator is fabricated by the following steps:

inserting shaped cellulose paper into a silicon mold,
introducing the hydrogel composition,
covering the lid of the mold with a clipper, and

heating in a vacuum oven to cure the hydrogel-reinforced cellulose paper separator.

**Curing the hydrogel-reinforced cellulose paper separator at varying temperature**

**Example 1.** Hydrogel-reinforced cellulose paper comprising cellulose paper, acrylamide, N,N'-methylenebis(acrylamide), potassium persulfate, and ZnSO4 cured at 30 °C for 6h.
**Example 2.** Hydrogel-reinforced cellulose paper comprising cellulose paper, acrylamide, N,N'-methylenebis(acrylamide), potassium persulfate, and ZnSO4 cured at 60 °C for 6h.
**Example 3.** Hydrogel-reinforced cellulose paper comprising cellulose paper, acrylamide, N,N'-methylenebis(acrylamide), potassium persulfate, and ZnSO4 cured at 90 °C for 6h.

Table 2. The effect of curing temperatures on the resistance of hydrogel-reinforced cellulose paper separator

| Curing temperatures | Resistance |
|---|---|
| 30 °C | 2.48 Ω |
| 60 °C | 1.738 Ω |
| 90 °C | 2.734 Ω |

**Curing the hydrogel-reinforced cellulose paper separator at varying time at constant temperature of 60 °C**

**Example 1.** Hydrogel-reinforced cellulose paper comprising cellulose paper, acrylamide, N,N'-methylenebis(acrylamide), potassium persulfate, and ZnSO4 cured at 60 °C for 4h.
**Example 2.** Hydrogel-reinforced cellulose paper comprising cellulose paper, acrylamide, N,N'-methylenebis(acrylamide), potassium persulfate, and ZnSO4 cured at 60 °C for 6h.
**Example 3.** Hydrogel-reinforced cellulose paper comprising cellulose paper, acrylamide, N,N'-methylenebis(acrylamide), potassium persulfate, and ZnSO4 cured at 60 °C for 8h.

Table 3. The effect of curing time on the resistance of hydrogel- reinforced cellulose paper separator

| Curing time | Resistance |
|---|---|
| 4 h | 2.397 Ω |
| 6 h | 1.738 Ω |
| 8 h | 2.521 Ω |

**Fabrication of a paper battery with the hydrogel-reinforced cellulose paper battery separator**

A paper battery is typically composed of a paper separator, and a pair of films (cathode and anode) disposed on either side of the paper separator. As shown in Fig. 1, the cathode is coated on the bottom surface of the hydrogel-reinforced cellulose paper separator and the anode is coated on the upper surface of the hydrogel-reinforced cellulose paper separator and form a paper battery which has high flexibility because of the presence of hydrogel-reinforced cellulose paper separator..

**Flexibility Test and Performance of the paper battery with the hydrogel-reinforced cellulose paper battery separator**

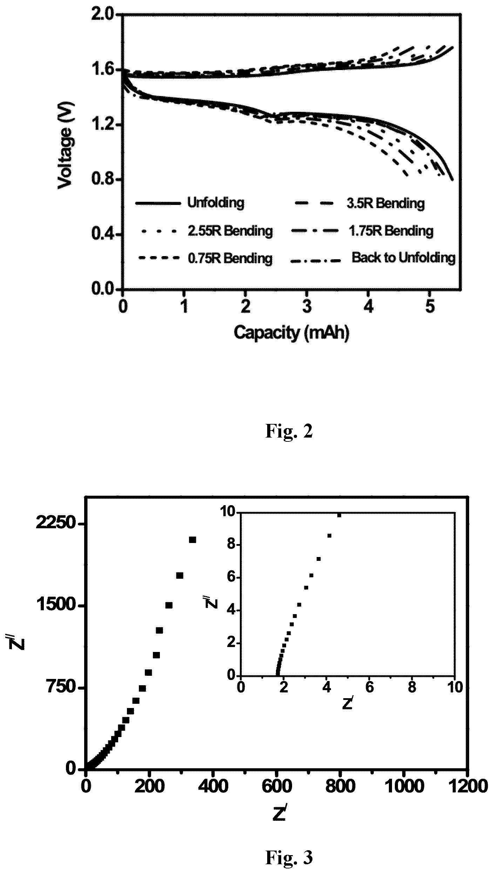

The paper battery with the paper battery with the hydrogel-reinforced cellulose paper battery separator was evaluated under various bending conditions to assess its flexibility and performance retention at a 1C rate. Cylindrical glassware with different radii was used to simulate varying degrees of bending. The battery was subjected to four distinct bending radii: 3.35 cm, 2.55 cm, 1.75 cm, and 0.75 cm.
The tests were conducted with a mass loading of 0.7 mg/cm$^2$, resulting in an initial discharge capacity of 5.319 mAh under non-bent conditions. As shown in Fig. 2, upon bending the battery to a radius of 3.35 cm, the discharge capacity decreased to 5.117 mAh. Further reductions in the bending radius resulted in the following discharge capacities: at 2.55 cm, 4.92 mAh; at 1.75 cm, 4.779 mAh; at 0.75 cm, 4.542 mAh. After the battery was returned to its original unfolded state and retested, the discharge capacity recovered to 5.029 mAh. Although this value was nearly equivalent to the initial non-bent capacity, it remained slightly lower than the capacity recorded after bending to a 3.35 cm radius. This minor reduction is likely due to mechanical stress during the bending process, which may have caused cracking or detachment of active materials from the current collector. Nonetheless, the paper battery with the paper battery with the hydrogel-reinforced cellulose paper battery separator exhibited significant recovery of its original capacity, highlighting its suitability for flexible applications. The paper battery with only cellulose paper as separator exhibited an initial discharge capacity of 5.4 mAh under non-bent condition. However, upon bending with a radius of 0.75R cm, the discharge capacity decreases to 3.92 mAh and when returned to its initial unfolded state, it further loses its capacity (2.99 mAh) because of the collapse of ionic conduction through the rigid cellulose paper upon bending.

**EIS Profile of the hydrogel-reinforced cellulose paper battery separator collected from a symmetric stainless steel cell**

In this experiment, the hydrogel-reinforced cellulose paper battery separator was soaked in electrolyte and assembled for electrochemical impedance spectroscopy (EIS) analysis. The electrolyte-soaked hydrogel-reinforced cellulose paper battery separator was positioned between two stainless steel spacers functioning as cathode and anode. The EIS data (Fig. 3) revealed a bulk resistance ($Rbulk$) of 1.738 $\Omega$, which was subsequently used to calculate the ionic conductivity ($\sigma$) of the electrolyte of the hydrogel-reinforced cellulose paper battery separator.

The ionic conductivity ($\sigma$) is determined based on the bulk resistance ($Rbulk$) obtained from the Nyquist plot using the following formula (1):

$$\sigma = \frac{L}{R_{\text{bulk}} \cdot A} \qquad (1)$$

where $L$ = Thickness of electrolyte or material (cm), $Rbulk$ = Bulk resistance (ohm), A = Cross-sectional area (cm$^2$).

The hydrogel-reinforced cellulose paper battery separator absorbs liquid electrolyte, allowing for ion transport through its structure. This configuration provides mechanical flexibility and minimizes electrolyte leakage, making it advantageous for applications requiring high flexibility and stable ionic conduction. The tested electrolyte of the hydrogel-reinforced cellulose paper battery separator demonstrates an ionic conductivity of $3.4 \times 10^{-3}$ S/cm at room temperature, indicating effective ion transport through the hydrogel-reinforced cellulose paper battery separator, which is suitable for flexible or wearable applications where robust ionic conductivity is necessary under dynamic conditions.

**Electrochemical Stability Analysis of Electrolyte of the hydrogel-reinforced cellulose paper battery separator**

**(a) *Positive Linear Sweep Voltammetry (LSV) (b) Cyclic Voltammetry (CV) curves of Zn∥MnO$_2$ coin cell with* the hydrogel-reinforced cellulose paper battery separator**

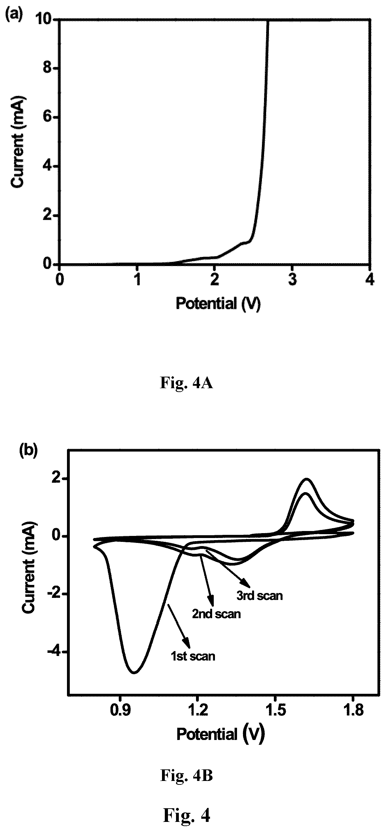

To assess the electrochemical stability of the electrolyte of the hydrogel-reinforced cellulose paper battery separator, Linear Sweep Voltammetry (LSV) and Cyclic Voltammetry (CV) were conducted (Fig. 4). LSV was performed to identify the electrolyte's oxidation potential, indicating the voltage limit beyond which oxidative degradation may occur (Fig. 4A). The LSV analysis demonstrated that the electrolyte of the hydrogel-reinforced cellulose paper battery separator exhibits an oxidation potential of 1.5 V versus the reference electrode, confirming its stability up to this voltage under applied conditions. Further analysis through cyclic voltammetry (CV) was conducted over a voltage range of 0.8 V to 1.8 V to evaluate the presence of any redox or side reactions within this window (Fig. 4B). The second and third reduction peaks revealed two distinct curves, with the second curve indicating proton insertion in the ZnMnO$_2$ battery using the hydrogel-reinforced cellulose paper battery separator, affirming the electrochemical inertness of the electrolyte of the hydrogel-reinforced cellulose paper battery separator within this range. The electrochemical stability evidenced by the LSV (Fig. 4A) and CV (Fig. 4B) measurements underscores the suitability of the electrolyte of the hydrogel-reinforced cellulose paper battery separator for applications requiring consistent performance within this voltage range, without significant degradation or side reactions that could impact device reliability.

**Galvanostatic Cycling Performance of the hydrogel-reinforced cellulose paper battery separator Zn∥Zn Symmetric Cell**

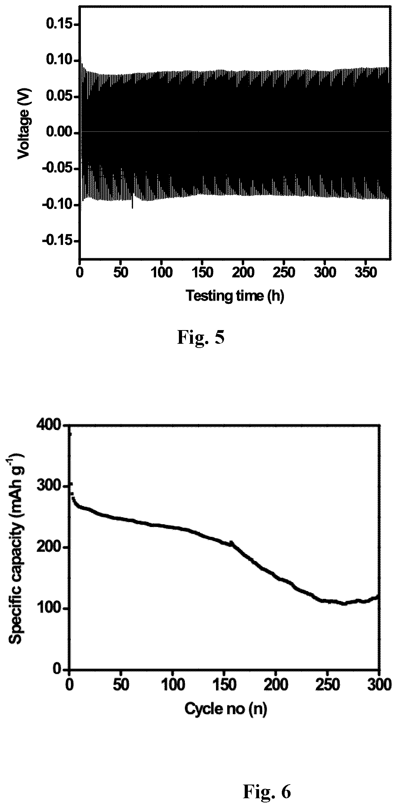

To evaluate the long-term stability of the electrolyte of the hydrogel-reinforced cellulose paper battery separator, Zn∥Zn cells assembled with the electrolyte of the hydrogel-reinforced cellulose paper battery separator were tested at a current density of 0.8 mA/cm$^2$ (Fig. 5). The cells exhibited stable operation for over 375 hours, as illustrated in Fig. 5, indicating a high tolerance for sustained cycling at this current density. Further testing was conducted on Zn‖MnO₂ cells using the hydrogel-reinforced cellulose paper battery separator, with zinc as the anode and manganese dioxide (MnO₂) as the cathode, cycled at a rate of 1C (Fig. 6). Fig. 6 displays the cycling stability of these cells, which achieved an initial discharge capacity of 304 mAh/g in the second cycle, approaching the theoretical capacity of 308 mAh/g for MnO₂. However, the capacity gradually declined over time due to the hydrogen evolution reaction inherent in liquid electrolyte systems and the structural degradation of the MnO₂ cathode material. Despite these effects, the cell retained a capacity of 100 mAh/g after 300 cycles, demonstrating notable stability. Minor fluctuations in capacity around cycle 150 were attributed to slight imbalances during testing. Nonetheless, the overall performance of the Zn‖MnO₂ cells with the hydrogel-reinforced cellulose paper battery separator reflects the electrolyte's stability and suitability for extended cycling.

The hydrogel-reinforced cellulose paper battery separator provides the following advantages:

a. Ion Conductivity: The hydrogel matrix embedded within the cellulose paper enhances ion movement between electrodes;

b. Mechanical Strength: Hydrogel reinforcement prevents tearing or degradation, contributing to durability and reliability;

c. Enhanced Safety: The robust structure of the separator minimizes the risk of internal short circuits;

d. Compostability: The separator is compostable, aligning with the demand for sustainable materials in battery technology; and

e. Compatibility with Manufacturing Processes: The fabrication process aligns with existing battery manufacturing methods, enhancing scalability and integration into production.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the scope of the present invention. Accordingly, the scope of the present invention is defined by the appended claims and is supported by the foregoing description.

**Claims**

1. A hydrogel composition for reinforcing a cellulose paper battery separator, comprising:

    a monomer,
    a cross-linking reagent,
    an initiator, and
    a metal salt;
    wherein the monomer is one selected from the group consisting of acrylamide, vinyl alcohol, ethylene glycol, and chitosan,
    the cross-linking reagent is one selected from the group consisting of N,N'-methylenebis(acrylamide), and glutaraldehyde,
    the initiator is one selected from the group consisting of potassium persulfate, ammonium persulfate, and azobisisobutyronitrile, and
    the metal salt is zinc salt. In certain embodiments, the zinc salt is one selected from the group consisting of ZnSO₄, zinc acetate, and zinc chloride.

2. The hydrogel composition of claim 1, wherein the hydrogel composition comprises acrylamide in the range of 0.7M to 2.8M, N, N'-methylenebis(acrylamide) in the range of 0.002M to 0.3M, potassium persulfate in the range of 0.03M to 0.12M, and ZnSO₄ in the range of 1.0M to 3.0M.

3. A hydrogel-reinforced cellulose paper battery separator, comprising:

    a cellulose paper, and
    a hydrogel integrated within the cellulose paper;
    wherein the hydrogel is derived from the hydrogel composition of claims 1-2.

4. A paper battery comprising:

    a hydrogel-reinforced cellulose paper battery separator of claim 3,

a cathode film being disposed on one surface of the hydrogel-reinforced cellulose paper battery separator, and an anode film being disposed on the other surface of the hydrogel-reinforced cellulose paper battery separator.

5. A method for fabricating a hydrogel-reinforced cellulose paper battery separator of claim 3, comprising:

placing a cellulose paper into a mold,
preparing a hydrogel composition by combining acrylamide, N,N'-methylenebis(acrylamide), potassium persulfate, and a zinc salt in deionized water,
applying the hydrogel composition into the mold,
covering the lid of the mold with a clipper to prevent air entering, and
curing at a controlled temperature and pressure to form a hydrogel-reinforced cellulose paper battery separator.

6. The method of claim 5, wherein the curing is done by putting the mold into a vacuum oven for 4-8 hours at 30-90°C.

Fig. 1

**Fig. 2**

**Fig. 3**

Fig. 4A

Fig. 4B

Fig. 4

Fig. 5

Fig. 6